# EUROPEAN PATENT APPLICATION

(11) **EP 4 733 716 A1**
(43) Date of publication of application: **29.04.2026**
(21) Application number: 25210234.8
(22) Date of filing: 21.10.2025
(51) Int. Cl.: G01B 11/24

(54) **DIMENSIONAL MEASUREMENT APPARATUS**

(30) Priority: 22.10.2024 GB 202415555
(71) Applicant: Pro-Sight Vision, Barnsley Yorkshire S74 9LH (GB)
(72) Inventor: Roy, Joseph, Barnsley, S74 9LH (GB); Amper-West, Matthew, Barnsley, S74 9LH (GB)
(74) Representative: Corbyn, David Jonathan

(57) **Abstract**

The present invention provides a dimensional measurement apparatus. The apparatus includes at least one light source, camera means spaced apart from and directed towards said light source, a platform located intermediate said light source and camera means, arranged to receive an article thereon to be measured by said apparatus, in use; and computing means in communication with at least said light source and camera means. The light source, upon communication with the computing means, is arranged in use to illuminate in portions or regions behind the article being measured with respect to the camera means, which correspond with edges and/or an outer profile of that article, as detected by the camera means and communicated to the light source via the computing means.

## Description

The invention to which this application relates is a dimensional measurement apparatus, in particular for use in measuring the dimensions and ascertaining the "flatness" of walls of a container or article.

In multiple industries, one example being in the glass industry, it is required that articles or containers are measured to ensure that they have been formed uniformly and according to predetermined requirements and that their dimensions meet those requirements. A common method of measurement is by "silhouetting", wherein an article being measured is backlit by a light source, creating a silhouette effect in front of it, and a camera is used to view and capture images of the silhouette, measuring the dimensions and assessing the "flatness" or smoothness of the walls of the article in certain locations, otherwise known as assessing the "sink and bulge" of the surface of the walls of an article.

For example, such measurements will be carried out on wine bottles as they are formed: a random selection of samples taken from a batch being produced will be subjected to the measurements, and variations in the flatness of the surface of the walls of the bottle, i.e. any concave (sink) or convex (bulge) formations, are measured and determined to be within or outside acceptable thresholds. If such sink and bulge formations are outside acceptable thresholds, for example, around the body of the bottle where a label will be adhered, this can cause creasing or wrinkling of the label, which is undesirable. Examples of other important areas which can be measured are the screw threads, bead and tuck under at the neck of a bottle. If there are deformities outside acceptable thresholds in this region, they can affect the ability to apply a closure to the bottle. Consequently, a lot of time and effort is put into systems and apparatus for measuring such features and dimensions of bottles and glass articles more generally.

However, problems do arise in current silhouetting methods given the degree of backlight which is shone from behind the article and towards the camera capturing the images. With such a wide light source provided behind the article, as light propagates from the source towards the camera lens, it diffracts as it passes the edges of the article being measured. Such diffraction causes a greying or blurring of the edges of the article in the image captured by the camera, which reduces the ability to obtain highly accurate and precise measurements. One option has been to narrow the width of the light source such that it is slightly wider than that of the article being measure, although this can be cumbersome or require obtaining multiple lights sources of different sizes to accommodate various articles of different sizes. Another method employed is to use apparatus having telecentric lenses. Telecentric lenses are designed to have a constant magnification regardless of the object's distance or location in the field of view and offer precise measurements and minimal distortion, making them ideal for metrology and machine vision applications, although the blurring issue is not fully removed. Such lenses are now commonly used in the systems and apparatus used to measure the dimensions of articles. Typically, they may be provided both in the camera and also with the light source itself, although some systems may only use such lenses in the camera. However, they are incredibly expensive, costing thousands or tens of thousands of pounds for a single lens. This can make the development of such apparatus prohibitive, or greatly reduce the potential market for them.

There is therefore a need to provide a dimensional measurement apparatus which not only addresses the issues associated with he blurring or greying of edges of the article being measured, caused by diffraction of the propagating light waves, but also which is far more cost effective than the currently available options.

It is therefore an aim of the present invention to provide an improved dimensional measurement apparatus which overcomes the aforementioned problems associated with the prior art.

It is a further aim of the present invention to provide a method of using an improved dimensional measurement apparatus which overcomes the aforementioned problems associated with the prior art.

According to a first aspect of the invention there is provided a dimensional measurement apparatus, said apparatus including:
at least one light source;
camera means spaced apart from and directed towards said light source;
a platform located intermediate said light source and camera means, arranged to receive an article thereon to be measured by said apparatus, in use; and
computing means in communication with at least said light source and camera means,
characterized in that said light source, upon communication with said computing means, is arranged in use to illuminate in portions or regions behind the article being measured with respect to the camera means, which correspond with edges and/or an outer profile of that article, as detected by the camera means and communicated to the light source via the computing means.

Typically, said at least one light source comprises a backlighting member.

In some embodiments, said light source may be provided as an LED matrix comprising a plurality of LEDs. Typically, the LEDs of said LED matrix are arranged to illuminate, in use, according to a detected location of edges of the article being measured when located on the platform and with respect to the camera means.

In other embodiments, the light source may be provided as a liquid crystal display (LCD) screen comprising a plurality of pixels. Typically, individual pixels in said LCD screen may be illuminated as required, in use.

Thus, in preferred embodiments, the at least light source may be provided as an LED matrix or an LCD screen.

Typically, said LEDs or pixels are arranged to illuminate, in use, a predetermined width or threshold either side of a detected edge or edges of the article being measured.

The present invention therefore provides a novel and effective apparatus which controls, minimizes and tailors the amount and degree of backlighting when taking measurements of the article. Not only is the width of the light source restricted in the present invention, ensuring it effectively matches the dimensions of the article being measure, but the backlight need not be illuminated across the whole width of the article; rather, only the LEDs or pixels within a predetermined threshold of the edge or edges of the article are illuminated. This means the light is also not shone through the article, being refracted and potentially causing further blurring. Thus, by focussing on the edges and not having a "blanket" light source behind the article, diffraction of light as waves propagate from the source and around the article is minimized. Consequently, this reduces the amount of blurring and/or greying of the edge or edge of the article being measured when viewed through the camera means, and provides a clearer and crisper image, allowing for both a more precise and more accurate measurement to be taken. The present invention also removes the need for very expensive telecentric lenses in such apparatus, meaning the apparatus of the present invention can be thousands (or tens of thousands) of pounds cheaper than existing systems used for the same purpose.

Typically, said camera means is arranged to detect the presence of the article to be measured on the platform, in use. Preferably, the camera means is arranged to capture an image of the article and communicate the same to the computing means, in use.

Typically, said computing means is arranged to calculate the dimensions and relative position of the article on the platform, in use. Preferably, the computing means is arranged to determine which LEDs or pixels of the LED matrix or LCD screen are to be illuminated and communicate the same to the LED matrix or LCD screen, in use.

In preferred embodiments, the platform is provided to be rotatable. Typically, rotation of the platform is driven via the provision of drive means associated therewith. Further typically, said drive means are provided as a stepper motor.

Typically, rotation of the platform, in use, permits measurements of the article about the whole circumference thereof to be taken.

Preferably, illumination of the at least one light source is changeable if the relative position of the article on the platform changes as it is being rotated, in use.

Thus, if the article is located on the platform in an off-centre position, the article will appear to move side-to-side as it rotates, from the perspective of the camera means. The camera means is arranged to detect this movement and in real time communicates this to the computing means, which in turn adjusts the illumination pattern of the LEDs or pixels accordingly. Consequently, even if the article being measure is seen to be moving, the backlighting or illumination of the LEDs remains constant with respect to the position of the article on the platform.

In preferred embodiments, the platform is provided to be vertically movable. Typically, said vertical movement is driven via the provision of drive means associated therewith. Further typically, said drive means are provided as a stepper motor.

Typically, vertical movement of the platform, in use, permits measurements of the article at varying heights and/or positions (body, shoulder, neck etc.) thereof to be taken.

Preferably, illumination of the at least one light source is changeable if the relative position of the article on the platform changes as it is moved vertically, in use.

Typically, the platform is provided to be rotatable and vertically moveable.

Thus, different portions, positions and/or locations of the article may be measured by the apparatus, in use, without adjusting the position, and/or angle of the camera means, without constantly moving the article itself to a desired position, and without requiring an oversized light source to accommodate articles of varying sizes.

According to another aspect of the present invention, there is provided a method of using a dimensional measurement apparatus as defined above, said method including the steps of:
providing a dimensional measurement apparatus as defined above;
placing an article to be measured on the platform of the apparatus; and
initiating the camera means to capture an initial image of the article and communicating its size and position to the computing means;
characterized by the computing means ascertaining the location of the edge or edges of the article and subsequently determining portions or regions of the light source to be illuminated behind the article with respect to the camera means, which correspond with the edge, edges and/or an outer profile of the article; the camera means subsequently performing dimensional measurements as required, in communication with the computing means.

In some embodiments, the at least one light source may be partially or fully illuminated after placement of article on the platform and prior to initial image of camera, to improve visibility of the article.

In some embodiments, said light source is provided as an LED matrix comprising a plurality of LEDs and the LEDs of said LED matrix are illuminated according to a detected location of the edges or an outer profile of the article being measured when located on the platform and with respect to the camera means.

In other embodiments, said light source is provided as an LCD screen comprising a plurality of pixels, and the individual pixels of said LCD screen are illuminated according to a detected location of the edges or an outer profile of the article being measured when located on the platform and with respect to the camera means.

Typically, said LEDs or pixels are illuminated a predetermined width or threshold either side of a detected edge or edges of the article being measured.

Typically, said camera means detects the presence of the article to be measured on the platform and captures an image of the article, subsequently communicating the same to the computing means.

Typically, said computing means calculates the dimensions and relative position of the article on the platform, in use, and determines which LEDs of the LED matrix or pixels of the LCD screen are to be illuminated, communicating the same to the LED matrix or LCD screen.

In preferred embodiments, the platform is provided to be rotatable and is rotated to permit measurements of the article about the whole circumference thereof to be taken.

Preferably, illumination of the at least one light source is changeable if the relative position of the article on the platform changes as it is being rotated.

In preferred embodiments, the platform is provided to be vertically movable and is moved as such to permit measurements of the article at varying heights and/or positions (body, shoulder, neck etc.) thereof to be taken.

Preferably, illumination of the at least one light source is changeable if the relative position of the article on the platform changes as it is moved vertically.

Embodiments of the present invention will now be described with reference to the accompanying figures, wherein:
Figure 1 illustrates a schematic of a dimensional measurement apparatus according to an embodiment of the present invention; and
Figure 2 illustrates a further schematic of a dimensional measurement apparatus from the perspective of a camera means and along the line A-A in Figure 1, in accordance with an embodiment of the present invention.

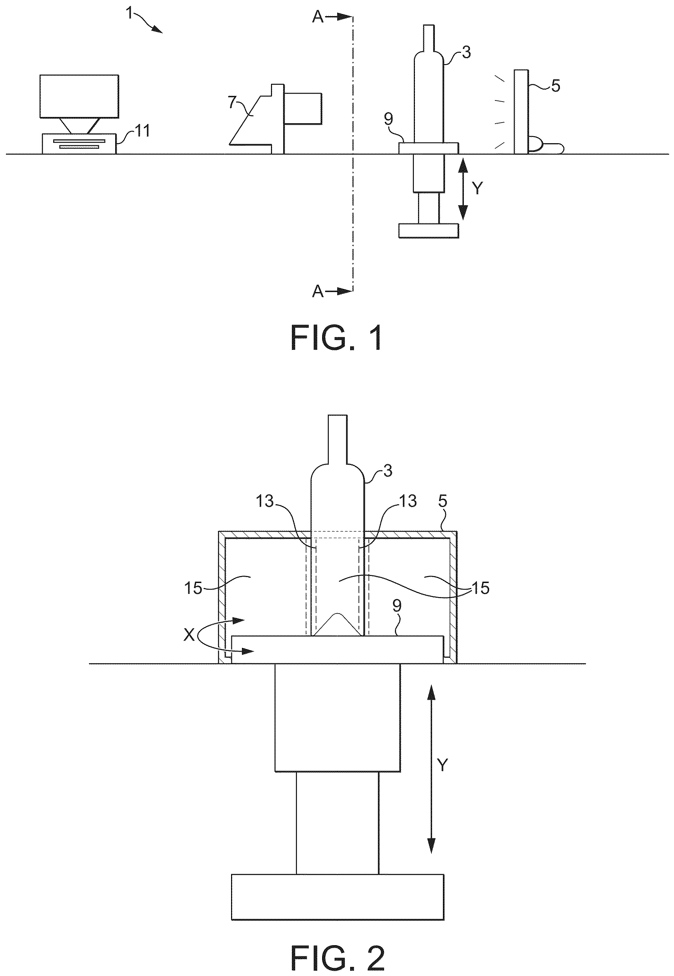

Referring now to Figure 1, there is illustrated an apparatus 1 provided to carry out dimensional measurements of an article 3, shown in this embodiment as a glass bottle 3. The apparatus 1 comprises a light source 5, a camera 7 spaced apart from the light source 5, and a platform 9 located in between the light source 5 and camera 7. Computing means 11 are also provided, in communication with at least the light source 5 and the camera 7. The glass bottle 3 is placed on the platform 9, and in a standard setup as known in the prior art, the whole of the light source 5 would illuminate, creating a silhouette effect on the bottle 3 from the perspective of the camera 7, which would then focus on the edges or outer profile of the bottle 3 capturing images which are relayed to and resolved by the computing means to make the required measurements. As discussed above, this can be problematic owing to the occurrence of blurring or greying at the edges to due the diffraction of the light waves around the bottle 3. In the present invention, and seen more clearly from the camera's perspective along line A-A in Figure 2, the light source 5 is provided to selectively and dynamically illuminate according to the position of the bottle 3 on the platform 9, such that only a portion of the light source is illuminated 13 behind the bottle 3 and which corresponds with the edges or outer profile of the bottle 3 as viewed from the camera 7. The remaining regions 15 of the light source 5 do not illuminate. The light source 5 is generally provided as either an LED matrix which comprises multiple rows and columns of individual LEDs, or an LCD screen which comprises multiple individual pixels which may be illuminated, and which is readily programmable by the computing means 11 to ensure the appropriate LEDs or pixels are illuminated at any given time. While LED matrices or LCD screens are preferred light source examples and are described exclusively herein, the skilled person will appreciate that other similar such light sources having multiple individual and programmable illuminating points/lights therein could also be employed in the present invention.

By controlling and restricting the amount of backlighting provided by the light source 5, such that it is tailored to the specific edges and profile of the bottle 3 being measured, as opposed to having a "blanket" light source as in the prior art, diffraction of light as waves propagate from the source 5 and around the bottle 3 is minimized. Consequently, this reduces the amount of blurring and/or greying of the edge or edges of the bottle 3 when viewed through the camera 7, and provides a clearer and crisper image, allowing for both a more precise and more accurate measurement to be taken. The apparatus 1 of the present invention also removes the need for very expensive telecentric lenses in the cameras of such apparatus, meaning the present apparatus 1 can be thousands of pounds cheaper than existing systems used for the same purpose. Further, as illumination of the LEDs or pixels is restricted to those which are a predetermined width either side of the edge or edges of the bottle 3, this also means that light is not shone through the bottle 3, being refracted and potentially causing further blurring.

After the bottle 3 is placed on the platform 9 by a user, the camera 7 is directed at the bottle 3 and subsequently detects the presence and location of the bottle 3, capturing an image in real time, which is processed by the computing means 11 to determine the dimensions and relative position of the bottle 3 on the platform 9. This may be done with or without full illumination of the light source 5 behind the bottle 3. This process does not take the specific measurements required; rather, it is done so as to determine the location of the bottle 3 and its edges, which in turn determines which LEDs within the LED matrix or pixels in the LCD screen are to be illuminated. A user can predetermine, using the computing means, how much illumination there should be either side of the approximate location of the edges, thus creating a tailored width or thickness of light which is illuminated from the LED matrix or LCD screen, and which corresponds with the edges or outer profile of the bottle 3.

The platform 9 on which the bottle 3 rests is arranged to be movable, both rotationally about Arrow X and vertically along Arrow Y. By enabling rotation of the bottle 3 when located on the platform 9, this enables measurements to be taken about the whole circumference of the bottle 3. Similarly, vertical movement of the platform 9 also permits measurements of the bottle 3 at varying heights and/or positions (body, shoulder, neck etc.) thereof to be taken. It also means that the light source 5 provided with the apparatus 1 of the invention can be relatively compact in size, as opposed to having to be sized to encompass the whole bottle 3, or other, larger articles. This again results in a significant cost saving when compared to existing apparatus available in the art. It also ensures that the camera 7 need not be moved, angled or otherwise adjusted to capture images of different regions of the bottle 3; it can focus on a single location and the platform 9 moves the required sections of the bottle 3 into view, as needed. In both instances, as the bottle 3 is either rotated or vertically moved, illumination of the light source 5 is also changeable/adjustable such that the illuminated portion 13 tracks the edges or outer profile of the bottle 3. That is to say, if the bottle 3 is located on the platform 9 in an off-centre position, the bottle 3 will appear to move side-to-side as it rotates, from the perspective of the camera 7. The camera 7 detects this movement and in real time communicates this to the computing means 11, which in turn adjusts the illumination pattern of the light source 5 accordingly, such that they track and follow the apparent side-to-side movement of the bottle 3.

Consequently, even if the bottle 3 being measured is seen to be moving, the backlighting or illumination of the light source 5 remains constant with respect to the position of the bottle 3 on the platform 9. In the same vein, as vertical movement of the platform 9 allows different portions, positions and/or locations of the bottle 3 to be measured by the apparatus 1, the camera 7 will track the edges and outer profile of the bottle 3 as it moves, for example, if initial measurements are carried out about the body/label portion of the bottle 3 and the platform subsequently moves downwards such that the shoulder or neck portion of the bottle 3 are then to be measured, the camera 7 will in real time ascertain the location of the edges, communicating the same to the computing means, which in turn will determine and set the appropriate illumination pattern of the light source 5 for that portion of the bottle 3. This is all achieved without needing to adjust the position, and/or angle of the camera 7, and without constantly moving the article itself to a desired position, and without requiring an oversized light source 5 to accommodate bottles or other such articles of varying sizes.

## Claims

1. A dimensional measurement apparatus, said apparatus including:
at least one light source;
camera means spaced apart from and directed towards said light source;
a platform located intermediate said light source and camera means, arranged to receive an article thereon to be measured by said apparatus, in use; and
computing means in communication with at least said light source and camera means,
**characterized in that** said light source, upon communication with said computing means, is arranged in use to illuminate in portions or regions behind the article being measured with respect to the camera means, which correspond with edges and/or an outer profile of that article, as detected by the camera means and communicated to the light source via the computing means.

2. An apparatus according to claim 1, wherein said at least one light source is provided as an LED matrix comprising a plurality of LEDs or an LCD screen comprising a plurality of individual pixels.

3. An apparatus according to claim 2, wherein the LEDs of said LED matrix or the pixels of the LCD screen are arranged to illuminate, in use, according to a detected location of edges of the article being measured when located on the platform and with respect to the camera means.

4. An apparatus according to claim 2, wherein said LEDs or pixels are arranged to illuminate, in use, a predetermined width or threshold either side of a detected edge or edges of the article being measured.

5. An apparatus according to claim 1, wherein said camera means is arranged to detect the presence of the article to be measured on the platform, in use, and to capture an image of the article and communicate the same to the computing means, in use, and wherein said computing means is arranged to calculate the dimensions and relative position of the article on the platform.

6. An apparatus according to claim 5, wherein said at least one light source is provided as an LED matrix comprising a plurality of LEDs or an LCD screen comprising a plurality of individual pixels, and the computing means is arranged to determine which LEDs of the LED matrix or pixels of the LCD screen are to be illuminated and communicate the same to the LED matrix, in use.

7. An apparatus according to claim 1, wherein the platform is provided to be rotatable.

8. An apparatus according to claim 7, wherein rotation of the platform, in use, permits measurements of the article about the whole circumference thereof to be taken.

9. An apparatus according to claim 7, wherein illumination of the at least one light source is changeable if the relative position of the article on the platform changes as it is being rotated, in use.

10. An apparatus according to claim 1, wherein the platform is provided to be vertically movable, and vertical movement of the platform, in use, permits measurements of the article at varying heights and/or positions (body, shoulder, neck etc.) thereof to be taken.

11. An apparatus according to claim 1, wherein the platform is provided to be vertically movable, and illumination of the at least one light source is changeable if the relative position of the article on the platform changes as it is moved vertically, in use.

12. A method of using a dimensional measurement apparatus as defined above, said method including the steps of:
providing a dimensional measurement apparatus as defined in claims 1-11;
placing an article to be measured on the platform of the apparatus; and
initiating the camera means to capture an initial image of the article and communicating its size and position to the computing means;
**characterized by** the computing means ascertaining the location of the edge or edges of the article and subsequently determining portions or regions of the light source to be illuminated behind the article with respect to the camera means, which correspond with the edge, edges and/or an outer profile of the article; the camera means subsequently performing dimensional measurements as required, in communication with the computing means.

13. A method according to claim 12, wherein the at least one light source is partially or fully illuminated after placement of article on the platform and prior to initial image of camera, to improve visibility of the article.

14. A method according to claim 12, wherein said light source is provided as an LED matrix comprising a plurality of LEDs and the LEDs of said LED matrix are illuminated according to a detected location of the edges or an outer profile of the article being measured when located on the platform and with respect to the camera means, and wherein said LEDs are illuminated a predetermined width or threshold either side of a detected edge or edges of the article being measured.

15. A method according to claim 12, wherein said light source is provided as an LCD screen comprising a plurality of pixels, and the individual pixels of said LCD screen are illuminated according to a detected location of the edges or an outer profile of the article being measured when located on the platform and with respect to the camera means, and wherein said pixels are illuminated a predetermined width or threshold either side of a detected edge or edges of the article being measured.
